# EUROPÄISCHE PATENTSCHRIFT

(11) **EP 3 919 419 B1**
(45) Veröffentlichungstag und Bekanntmachung des Hinweises auf die Patenterteilung: **01.05.2024**
(21) Anmeldenummer: 21177690.1
(22) Anmeldetag: 04.06.2021
(51) Int. Cl.: B67B 3/00, B67C 3/24, B65G 47/84, B65G 47/90

(54) **VORRICHTUNG ZUM HALTEN EINES BEHÄLTERS UND BEHÄLTERBEHANDLUNGSVORRICHTUNG**
DEVICE FOR HOLDING A CONTAINER AND CONTAINER TREATMENT DEVICE
DISPOSITIF DE MAINTIEN D'UN RÉCIPIENT ET DISPOSITIF DE MANUTENTION DES RÉCIPIENTS

(30) Priorität: 04.06.2020 DE 102020114905
(43) Veröffentlichungstag der Anmeldung: 08.12.2021
(73) Patentinhaber: KRONES AG, 93073 Neutraubling (DE)
(72) Erfinder: Ehrismann, Tobias, 93073 Neutraubling (DE); Landler, Bruno, 93073 Neutraubling (DE); Schoenfelder, Markus, 93073 Neutraubling (DE)
(74) Vertreter: Nordmeyer, Philipp Werner

(56) Entgegenhaltungen:
- WO-A1-01/92109
- WO-A1-2009/135597
- DE-A1- 4 424 077
- DE-A1-102010 049 026
- JP-A- 2007 238 121
- US-A- 3 868 009

## Beschreibung

### Technisches Gebiet

Die vorliegende Erfindung betrifft eine Vorrichtung zum Halten eines Behälters in einer Behälterbehandlungsvorrichtung, beispielsweise zum Halten eines Getränkebehälters in einem Halsabschnitt oder in einem Bauchabschnitt in einer Behälterverschließvorrichtung.

### Stand der Technik

Es ist bekannt, in Getränkeabfüllanlagen die jeweils zu befüllenden Behälter beziehungsweise bereits befüllte Behälter mittels Vorrichtungen zum Halten eines Behälters zu halten und auf diese Weise durch die einzelnen Behandlungsstationen der Behälterbehandlungsvorrichtung zu transportieren. Dabei sind unterschiedliche Vorrichtungen zum Halten des jeweiligen Behälters bekannt, welche die jeweiligen zu behandelnden Behälter auf unterschiedliche Art und Weise halten.

So sind beispielsweise passive Vorrichtungen bzw. passive Klammern zum Halten eines Behälters bekannt, welche lediglich durch das Einschieben des jeweiligen Behälters in die Vorrichtung zum Halten des Behälters elastisch vorgespannt werden und dann den jeweiligen Behälter halten. Aus der DE 10 2015 218 204 A1 ist eine solche Klammer zum Greifen von Behältern bekannt. Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Weiterhin ist eine Neigung zum Verkratzen der Oberflächen der jeweiligen Behälter gegeben, so dass die Qualität der Behälter herabgesetzt sein kann.

Weiterhin bekannt sind aktive Vorrichtungen bzw. aktive Klammern zum Halten eines Behälters, bei welchen ein Öffnen und Schließen der jeweiligen Halteabschnitte der Vorrichtung zum Halten eines Behälters mittels eines Aktuators aktiv durchgeführt wird. Solche aktiven Vorrichtungen zum Halten eines Behälters dienen insbesondere dazu, eine sichere und schonende Übernahme der jeweiligen Behälter von einer vorhergehenden Vorrichtung zum Halten eines Behälters zu ermöglichen oder eine ebenso sichere und behälterschonende Übergabe der Behälter an eine nachfolgende Vorrichtung zum Halten eines Behälters zu gewährleisten. Insbesondere kann durch das aktive Öffnen und Schließen der jeweiligen Vorrichtung zum Halten eines Behälters eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann. Solche aktiven Vorrichtungen zum Halten eines Behälters setzen sich aus einer Vielzahl von Einzelteilen, beispielsweise Klammerarmen, Buchsen, Federelementen, Vorspannelementen und entsprechenden Verbindungselementen zum sicheren Verbinden der vorgenannten Teile, sowie Ansteuerelementen zum Steuern der Position der Klammerarme bzw. der Halteabschnitte, beispielsweise Aktuatoren, Laufrollen, Verzahnungen, zusammen. Derart aufgebaute Vorrichtungen zum Halten eines Behälters sind mithin aufwendig zu reinigen und weisen einen entsprechend hohen Fertigungsaufwand auf. Derartige Vorrichtungen zum Halten eines Behälters sind beispielsweise aus der US 2012/085068 A1 oder der DE 10 2009 043 984 A1 bekannt.

In Getränkeabfüllanlagen sind die abgefüllten Produkte oftmals empfindlich gegenüber Verunreinigungen, sodass beispielsweise das Befüllen der Behälter oder das Verschließen der Behälter mit einem Behälterverschluss unter einer speziellen Atmosphäre, welche beispielsweise durch einen Reinraum oder Isolator bereitgestellt ist, erfolgt.

Um den Reinigungsaufwand zu reduzieren, ist es bekannt, die Steuereinheit, durch welche die Position der Klammerarme gesteuert bzw. vorgegeben wird, außerhalb eines Reinraums anzuordnen, wie beispielsweise der DE 10 2010 049 026 A1 oder der DE 10 2012112 946 A1 zu entnehmen. Aufgrund der Anordnung der Steuereinheit in Bezug auf eine Drehachse der Transportvorrichtung radial innerhalb der Vorrichtung zum Halten eines Behälters ist entsprechend ein relativ großer Bauraum der Transportvorrichtung in radialer Richtung zwingend erforderlich.

Die DE 44 24 077 A1, in der die Merkmale des Oberbegriffs von Anspruch 1 enthalten sind, beschreibt eine Vorrichtung zum Transportieren von Gegenständen. Die JP 2007-238121 A beschreibt eine Vorrichtung zum Befüllen von Behältern. Beide Vorrichtungen weisen Greifelemente mit verschwenkbaren Fingern auf.

### Darstellung der Erfindung

Ausgehend von dem bekannten Stand der Technik ist es eine Aufgabe der vorliegenden Erfindung, eine verbesserte Vorrichtung zum Halten eines Behälters in einer Behälterbehandlungsvorrichtung, bevorzugt zum Halten eines Getränkebehälters in einem Halsabschnitt oder in einem Bauchabschnitt in einer Behälterverschließvorrichtung, sowie ein entsprechendes Verfahren bereitzustellen.

Die Aufgabe wird durch eine Vorrichtung zum Halten eines Behälters in einer Behälterbehandlungsvorrichtung, bevorzugt zum Halten eines Getränkebehälters in einem Halsabschnitt oder in einem Bauchabschnitt in einer Behälterverschließvorrichtung, mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Halten eines Behälters in einer Behälterbehandlungsvorrichtung, bevorzugt zum Halten eines Getränkebehälters in seinem Halsabschnitt oder in seinem Bauchabschnitt, vorgeschlagen, umfassend zwei in einer Schwenkebene relativ zueinander schwenkbare Greifarme, welche jeweils einen Halteabschnitt zum Halten des zu haltenden Behälters aufweisen. Die Vorrichtung umfasst ferner eine Hubstange, welche ist derart mit den Greifarmen gekoppelt ist, dass durch ein Verschieben der Hubstange senkrecht zur Schwenkebene der Greifarme die Halteabschnitte relativ zueinander verschwenkbar sind.

Dadurch, dass die Vorrichtung eine Hubstange umfasst, welche derart mit den Greifarmen gekoppelt ist, dass durch ein Verschieben der Hubstange senkrecht zur Schwenkebene der Greifarme die Halteabschnitte relativ zueinander verschwenkbar sind, kann gegenüber herkömmlichen Vorrichtungen ein Mindestbauraum in radialer Richtung einer Behältertransportvorrichtung kleiner ausfallen. Anstelle einer Ansteuerung von radial innen kann die Ansteuerung der Klammerarme der Vorrichtung zum Halten eines Behälters in Bezug auf die Schwenkebene oberhalb oder unterhalb angeordnet sein. Hier ist im Prinzip unbegrenzter Bauraum vorhanden. Dadurch wiederum ist es möglich, die Vorrichtung zum Halten eines Behälters näher an eine Drehachse der Transportvorrichtung anzubringen.

Zudem kann eine Abdichtung zwischen der verschiebbaren Hubstange und einem Gehäuse einer Behälterbehandlungsvorrichtung einfacher aufgebaut sein, als bei schwenkenden bzw. drehenden Ansteuerelementen, insbesondere kann eine statische Abdichtung an der Hubstange und an dem Gehäuse erfolgen.

Ferner kann die Ansteuerung bzw. eine Steuereinheit in einfacher Weise in einen Bereich gelegt werden, in welchem eine Kontaminierung mit dem Füllprodukt unwahrscheinlicher ist oder in geringerem Maße erfolgt. Mit anderen Worten kann die Ansteuerung oder die Steuereinheit auch außerhalb eines Reinraums angeordnet werden.

Die Hubstange ist vorzugsweise in Richtung ihrer Längsachse verschiebbar ausgebildet.

Es hat sich als besonders vorteilhaft herausgestellt, wenn die Hubstange in Bezug auf ihre Längsachse senkrecht zur Schwenkebene orientiert ist.

Gemäß der Erfindung umfasst die Hubstange zwei in Richtung der Längsachse relativ zueinander verschiebbare Stangenelemente, wobei die Stangenelemente in Richtung der Längsachse über ein Federelement gekoppelt sind. Dadurch ist es möglich, eine entsprechend des Federweges des Federelementes entstehende Haltekraft, mit welcher der Behälter in den Halteabschnitten gehalten wird, bereitzustellen. Die Haltekraft ergibt sich dabei durch einen Überhub der Stangenelemente zueinander, wobei der Überhub den Federweg des Federelementes darstellt.

Zur Umwandlung der Verschiebung der Hubstange in eine Schwenkbewegung der Haltebereiche relativ zueinander ist bevorzugt entsprechend eine Koppelanordnung zwischen den Greifarmen und der Hubstange angeordnet, welche das Verschieben der Hubstange in das Verschwenken der Haltebereiche zueinander umwandelt.

Gemäß einer bevorzugten Ausführungsform sind die Greifarme um eine gemeinsame Schwenkachse schwenkbar angeordnet. Alternativ können die Greifarme jeweils eine eigene Schwenkachse aufweisen, um welche sie schwenkbar angeordnet sind.

Ferner ist es möglich, dass das Schwenken der Greifarme zueinander durch eine Verschiebung der Greifarme in der Schwenkebene, bevorzugt eine Verschiebung und ein Schwenken der Greifarme relativ zueinander erfolgt, ohne dass die Greifarme eine feste Schwenkachse aufweisen.

Für die Bewegung der Halteabschnitte relativ zueinander kann auch lediglich einer der Greifarme bewegt werden und der andere feststehend ausgebildet sein.

Ein besonders genaues Steuern der Position der Greifarme unter gleichzeitiger Bereitstellung eines leicht zu reinigenden Aufbaus der Vorrichtung zum Halten eines Behälters kann erzielt werden, wenn zumindest ein Greifarm einen fest mit dem Greifarm verbundenen Schwenkhebel umfasst, welcher über ein Koppelglied mit der Hubstange gekoppelt ist.

Vorzugsweise weisen beide Greifarme jeweils einen Schwenkhebel auf, welcher jeweils über ein Koppelglied mit der Hubstange gekoppelt ist oder die Greifarme sind zueinander drehgekoppelt, bevorzugt über zwei ineinandergreifende Zahnräder.

Gemäß einer weiteren bevorzugten Ausführungsform ist das Koppelglied drehbar an der Hubstange angeordnet, wobei bevorzugt eine Drehachse des Koppelgliedes am Koppelglied senkrecht zur Längsachse der Hubstange orientiert ist.

Alternativ oder zusätzlich kann der Schwenkhebel in seiner Längsrichtung verschiebbar am Koppelglied aufgenommen sein.

Ferner hat es sich als vorteilhaft herausgestellt, wenn der Schwenkhebel relativ zum Koppelglied drehbar und/oder spielbehaftet am Koppelglied aufgenommen ist.

Um die Position der Greifarme einstellen zu können, kann das Koppelglied ein Einstellelement, bevorzugt ein Exzenterelement, zum Einstellen der Schwenkposition des Greifarmes aufweisen.

Gemäß einer weiteren bevorzugten Ausführungsform umfasst die Hubstange ein Schlittenelement, wobei das zumindest eine Koppelglied über das Schlittenelement mit der Hubstange gekoppelt ist.

Gemäß einer bevorzugten Weiterbildung kann bezogen auf die Längsachse das Koppelglied auf einer Seite mit dem Schlittenelement gekoppelt sein, und das Koppelglied auf der anderen Seite mit dem Schwenkhebel gekoppelt sein.

Es hat sich herausgestellt, dass ein einfacher und stabiler Aufbau der Vorrichtung zum Halten eines Behälters erzielt werden kann, wenn das Schlittenelement S-förmig ausgebildet ist und an einem Mittelabschnitt mit der Hubstange verbunden ist.

Gemäß einer weiteren bevorzugten Ausführungsform ist bezogen auf eine Orientierung eines in der Vorrichtung zum Halten eines Behälters durch die Greifarme gehaltenen Behälters die Kopplung des Koppelgliedes an der Hubstange in Richtung der Längsachse oberhalb der Kopplung des Koppelgliedes mit dem Schwenkhebel angeordnet ist. Erstreckt sich der Schwenkhebel bezogen auf die Schwenkachse auf der Seite des Halteabschnittes, so kann durch ein Verschieben der Hubstange in Richtung auf die Greifarme zu, mit anderen Worten bezogen auf die Orientierung der Vorrichtung zum Halten eines Behälters durch ein Verschieben der Hubstange nach unten, ein Öffnen der Greifarme, mithin ein Schwenken der Halteabschnitte der Greifarme voneinander weg, ermöglicht werden. Entsprechend kann durch ein Anheben der Hubstange, mithin einem Verschieben der Hubstange nach oben, ein Schließen der Halteabschnitte, bei welchem die Halteabschnitte gegensinnig aufeinander zu geschwenkt werden, erzielt werden.

Erstreckt sich der Schwenkhebel bezogen auf die Schwenkachse auf einer dem Halteabschnitt gegenüberliegenden Seite, etwa einer Rückseite der Vorrichtung, so kann durch ein Verschieben der Hubstange in Richtung auf die Greifarme zu, mit anderen Worten bezogen auf die Orientierung der Vorrichtung zum Halten eines Behälters durch ein Verschieben der Hubstange nach unten, ein Schließen der Greifarme, mithin ein Schwenken der Halteabschnitte der Greifarme aufeinander zu, ermöglicht werden. Entsprechend kann durch ein Anheben der Hubstange, mithin einem Verschieben der Hubstange nach oben, ein Öffnen der Halteabschnitte, bei welchem die Halteabschnitte gegensinnig voneinander weg geschwenkt werden, erzielt werden.

Alternativ kann die Kopplung des Koppelgliedes an der Hubstange in Richtung der Längsachse unterhalb der Kopplung des Koppelgliedes mit dem Schwenkhebel angeordnet sein. Dadurch ist es möglich, durch ein Verschieben der Hubstange in Richtung auf die Greifarme zu, mit anderen Worten bezogen auf die Orientierung der Vorrichtung zum Halten eines Behälters durch ein Verschieben der Hubstange nach unten, ein Öffnen der Greifarme, bei welchem die Halteabschnitte gegensinnig voneinander weg geschwenkt werden, zu erreichen, wenn der Schwenkheben auf der Seite des Halteabschnitts angeordnet ist. Ein Schließen erfolgt, wenn der Schwenkhebel sich auf der dem Halteabschnitt gegenüberliegenden Seite erstreckt. Entsprechend kann durch ein Anheben der Hubstange, mithin einem Verschieben der Hubstange nach oben, ein Schließen der Halteabschnitte, mithin ein Schwenken der Halteabschnitte der Greifarme aufeinander zu, erzielt werden, wenn der Schwenkheben auf der Seite des Halteabschnitts angeordnet ist, und ein Schließen erzielt werden, wenn sich der Schwenkhebel auf der dem Halteabschnitt gegenüberliegenden Seite erstreckt.

Folglich kann gemäß einer weiteren bevorzugten Ausführungsform die Kopplung zwischen dem zumindest einen Schwenkhebel und dem zumindest einen Koppelglied bezogen auf die Schwenkachse auf einer dem Halteabschnitt gegenüberliegenden Seite angeordnet sein, oder die Kopplung zwischen dem zumindest einen Schwenkhebel und dem zumindest einen Koppelglied bezogen auf die Schwenkachse auf der Seite des Halteabschnitts angeordnet sein.

Gemäß einer weiteren bevorzugten Ausführungsform weist die Hubstange an ihrer den Greifarmen gegenüberliegenden Seite eine Steuereinheit zum Steuern der Position der Hubstange in Bezug auf die Längsachse auf. Die Steuereinheit kann dadurch in einem Bereich vorgesehen sein, in welchem sie eine geringe Gefahr aufweist, durch Füllprodukt verunreinigt zu werden. Insbesondere ist es dadurch möglich, die Steuereinheit außerhalb eines Gehäuses anzuordnen, welches die Greifarme der Vorrichtung zum Halten eines Behälters einhaust.

Um die Halteabschnitte der Greifarme in einer vorgegebenen Position, beispielsweise einer Schließposition der Halteabschnitte oder einer geöffneten Position der Halteabschnitte, zu halten, kann die Steuereinheit ein Vorspannelement zum Vorspannen der Hubstange in eine vorgegebene Position, bevorzugt eine Feder, aufweisen.

Alternativ oder zusätzlich kann die Hubstange einen Interaktionsabschnitt zum Interagieren mit einer Vorgabevorrichtung zum Vorgeben der Position der Hubstange umfassen, wobei das Interaktionselement bevorzugt in Form eines Gleitelements, eines Bolzens und/oder einer Rolle, bevorzugt ausgebildet zum Gleiten und/oder Abrollen auf einer als Leitkurve oder Führungsnut ausgebildeten Vorgabevorrichtung, ausgebildet ist.

Gemäß einer weiteren bevorzugten Ausführungsform umfasst die Hubstange eine Dichtung zum Abdichten der Hubstange gegenüber einer Gehäuseöffnung eines Gehäuses der Behälterbehandlungsvorrichtung, durch welche sich die Hubstange erstreckt. So ist es möglich, die Greifarme innerhalb des Gehäuses anzuordnen, wobei im Inneren des Gehäuses bevorzugt eine spezielle Atmosphäre, insbesondere eine Atmosphäre mit reduzierter Keimzahl, etwa entsprechend eines Reinraums, bereitgestellt werden kann, in welcher der durch die Greifarme gehaltene Behälter behandelt werden kann, sowie eine Steuereinheit außerhalb des Gehäuses angeordnet werden kann.

Vorzugsweise ist die Dichtung an der Hubstange befestigt. Alternativ oder zusätzlich kann die Dichtung ausgebildet sein, an der Gehäuseöffnung befestigt zu werden.

Die Dichtung ist bevorzugt dazu ausgebildet, einen zum Schwenken der Greifarme während des Betriebs erforderlichen Hub der Hubstange auszugleichen, wobei die Dichtung bevorzugt ein Silikonmaterial umfasst und/oder als Faltenbalg ausgebildet ist.

Unter "befestigt" wird in diesem Sinne eine statische Befestigung verstanden, bei welcher keine Relativbewegung zwischen Hubstange und Dichtung bzw. zwischen Gehäuse und Dichtung vorliegt bzw. möglich ist.

Gemäß einer weiteren bevorzugten Ausführungsform haust ein Kopplungsgehäuse das zumindest eine Koppelglied und den zumindest einen Schwenkhebel ein, wobei sich bevorzugt die Hubstange durch eine bevorzugt abgedichtete Öffnung im Kopplungsgehäuse erstreckt, und die Greifarme jeweils an einer um die Schwenkachse des Greifarms schwenkbaren Welle befestigt sind, wobei sich die Wellen durch eine bevorzugt abgedichtete Bohrung im Kopplungsgehäuse erstrecken. Dadurch kann der Bereich der Kopplung zwischen Hubstange und Greifarmen, insbesondere der Bereich, in welchem das Koppelglied mit der Hubstange gekoppelt ist, der Bereich, in welchem das Koppelglied mit dem Schwenkhebel gekoppelt ist, und eine Lagerung der Wellen an einer Halterung durch das Kopplungsgehäuse vor Kontaminationen, beispielsweise mit Füllprodukt, geschützt werden.

Die oben genannte Aufgabe wird ferner durch eine Behälterbehandlungsvorrichtung mit den Merkmalen des Anspruchs 9 gelöst. Weiterbildungen der Behälterbehandlungsvorrichtung ergeben sich aus den Unteransprüchen sowie der vorliegenden Beschreibung und den Figuren.

Entsprechend wird eine Behälterbehandlungsvorrichtung, bevorzugt zum Schließen eines Behälters mit einem Behälterverschluss, vorgeschlagen, welche eine Transportvorrichtung zum Transportieren von Behältern umfasst. Kennzeichnend für die Behälterbehandlungsvorrichtung ist, dass die Transportvorrichtung eine Vorrichtung zum Halten eines Behälters gemäß einer der vorstehenden Ausführungsformen aufweist.

Dadurch, dass die Transportvorrichtung eine Vorrichtung zum Halten eines Behälters gemäß einer der vorstehenden Ausführungsformen aufweist, treffen die hinsichtlich der Vorrichtung beschriebenen Vorteile und Wirkungen in analoger Weise auch auf die Behälterbehandlungsvorrichtung zu.

Gemäß einer bevorzugten Ausführungsform umfasst die Behälterbehandlungsvorrichtung ein Gehäuse zum Bereitstellen eines abgeschlossenen Raumes, wobei die Greifarme im Inneren des Gehäuses angeordnet sind und die Hubstange sich durch eine Gehäuseöffnung erstreckt, wobei die Steuereinheit außerhalb des Gehäuses, bevorzugt oberhalb der Gehäuseöffnung, angeordnet ist.

Vorzugsweise ist die Gehäuseöffnung abgedichtet, indem eine wie oben beschriebene Dichtung zwischen der Gehäuseöffnung und der Hubstange vorgesehen ist.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Seitenansicht einer Behälterbehandlungsvorrichtung;
- Figur 2: schematisch eine perspektivische Seitenansicht einer Vorrichtung zum Halten eines Behälters;
- Figur 3: schematisch eine perspektivische Rückansicht der Vorrichtung aus Figur 2;
- Figur 4: schematisch eine Rückansicht der Vorrichtung aus Figur 2;
- Figur 5: schematisch ein Paar von Greifarmen der Vorrichtung aus Figur 2 in einem geöffneten Zustand;
- Figur 6: schematisch das Paar von Greifarmen aus Figur 5 in einem Schließzustand;
- Figur 7: schematisch eine Funktionsskizze der Vorrichtung aus Figur 1;
- Figur 8: schematisch eine Funktionsskizze einer weiteren Vorrichtung zum Halten eines Behälters; und
- Figur 9: schematisch eine Seitenansicht einer weiteren Vorrichtung zum Halten eines Behälters.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

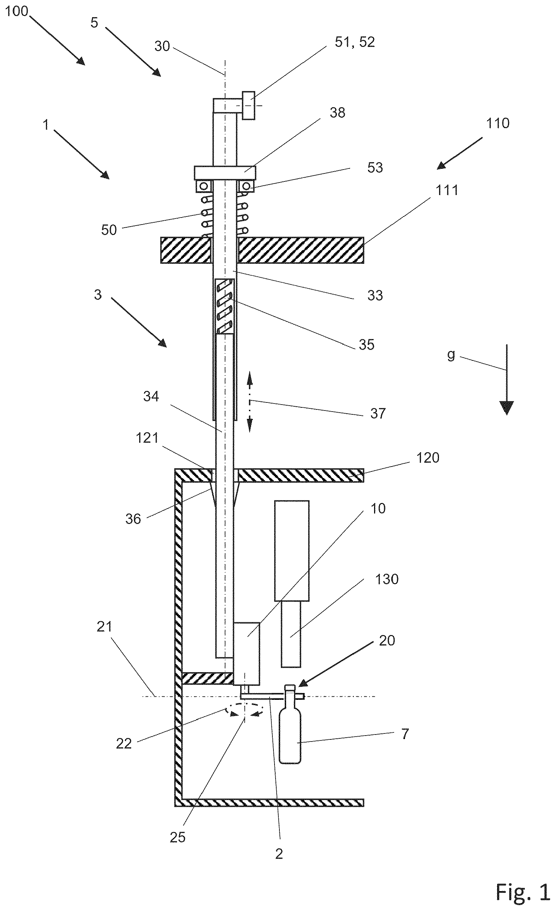

In Figur 1 ist schematisch eine Seitenansicht einer Behälterbehandlungsvorrichtung 100 gezeigt, welche eine Transportvorrichtung 110 zum Transportieren von Behältern 7, eine Behandlungsvorrichtung 130, vorliegend in Form einer Schließvorrichtung zum Schließen eines Behälters 7 mit einem Behälterverschluss (nicht gezeigt), und ein die Behandlungsvorrichtung 130 zumindest teilweise einhausendes Gehäuse 120 umfasst. Bei dem Gehäuse 120 kann es sich beispielsweise um einen Isolator handeln, der zur Ausbildung einer gegenüber der Umgebung abgeschirmten Atmosphäre in dessen Innenraum dient.

Die Transportvorrichtung 110 weist eine Vorrichtung 1 zum Halten eines Behälters 7 auf, welche zwei in einer Schwenkebene 21 relativ zueinander schwenkbare Greifarme 2 umfasst, welche jeweils einen Halteabschnitt 20 zum Halten des zu haltenden Behälters 7, vorliegend in einem Halsabschnitt des Behälters 7, aufweisen.

Die Vorrichtung 1 umfasst ferner eine Hubstange 3, welche derart mit den Greifarmen 2 gekoppelt ist, dass durch ein Verschieben der Hubstange 3 senkrecht zur Schwenkebene 21 die Halteabschnitte 20 relativ zueinander verschwenkbar sind. In Figur 1 ist das Verschieben der Hubstange 3 mittels des Bezugszeichens 37 angedeutet, und ist das Schwenken des Greifarms 2 mittels des Bezugszeichens 20 angedeutet.

Die Hubstange 3 erstreckt sich entlang ihrer Längsachse 30. Vorliegend ist die Hubstange 3 in Bezug auf ihre Längsachse 30 senkrecht zur Schwenkebene 21 orientiert.

Zwischen der Hubstange 3 und den Greifarmen 2 ist eine Kopplungsanordnung 10 angeordnet, welche eingerichtet ist, ein Verschieben der Hubstange 3 senkrecht zur Schwenkebene 21 in ein Schwenken der Greifarme 2 relativ zueinander umzuwandeln.

Die Hubstange 3 umfasst eine Steuereinheit 5 zum Steuern der Position der Hubstange 3 in Bezug auf die Längsachse 30. Die Steuereinheit 5 umfasst ein Vorspannelement 50, vorliegend in Form einer Spiralfeder, welche sich an einer Seite an einem Absatz 38 der Hubstange 3 abstützt und an der anderen Seite an einem Träger 111 der Transportvorrichtung 110 abstützt.

Zwischen dem Absatz 38 und dem sich daran abstützenden Ende der Spiralfeder ist ein Wälzlager 53 zum Drehentkoppeln von Vorspannelement 50 und Absatz 38 angeordnet.

Mittels des Vorspannelementes 50 ist die Hubstange 3 in eine in Richtung der Längsachse 30, welche vorliegend der Gravitationsrichtung g entspricht, gesehen oberen Endposition vorgespannt.

Die Steuereinheit 5 umfasst ferner einen Interaktionsabschnitt 51, vorliegend in Form einer Rolle 52, welche über eine Leitkurve (nicht gezeigt) abrollen kann. In der oberen Endposition der Hubstange 3 sind die Greifarme 2 und mithin die Halteabschnitte 20 in einer geöffneten Position.

Um die Greifarme 2 und mithin die Halteabschnitte 20 in eine Schließposition zu bringen, in welcher der zu haltenden Behälter 7 gehalten wird, ist die Hubstange 3 entgegen der Vorspannung des Vorspannelementes 50 senkrecht zur Schwenkebene 21 in Richtung der Greifarme 2 zu bewegen. Die Verschiebung 37 der Hubstange in Gravitationsrichtung g wird durch die Koppelungsanordnung 10 in die Schwenkbewegung 22 der Greifarme 2 übersetzt.

Die Hubstange 3 umfasst zwei in Richtung der Längsachse 30 relativ zueinander verschiebbare Stangenelemente 33, 34, welche in Richtung der Längsachse über ein Federelement 35 gekoppelt sind. Über das Federelement 35 und einen Überhub des oberen Stangenelementes 33 kann entsprechend eine Schließkraft an den Halteabschnitten 20 bereitgestellt werden.

Der Überhub des Stangenelements 33, mithin der Weg, welcher das Stangenelement 33, vorgegeben via der Rolle 52, zusätzlich zurücklegt, nachdem aufgrund des Verschiebens des Hubelementes 3 in Richtung der Greifarme 2 die Greifarme 2 sich in der Schließposition befinden, entspricht hierbei einem Federweg des Federelementes 35, durch welchen entsprechend der Federsteifigkeit des Federelementes 35 eine Druckkraft auf das untere Stangenelement 34 übertragen wird. Über die Kopplungsanordnung 10 wird diese Druckkraft auf die Greifarme 2 übertragen, so dass die Greifarme 2 an ihren Halteabschnitten 20 mit einer entsprechenden Schließkraft in Richtung des zu haltenden Behälters 7 drücken.

Alternativ kann die Hubstange auch derart mit den Greifarmen gekoppelt sein, dass ein Anheben des Hubstange 3 entgegen der Gravitationsrichtung g bedingt wird. Entsprechend kann dann das Vorspannelement 35 als Zugfeder ausgebildet sein.

Die Greifarme 2 der Vorrichtung 1 sind innerhalb des durch das Gehäuse 120 bereitgestellten abgeschlossenen Raumes angeordnet. Die Hubstange 3 erstreckt sich durch eine Gehäuseöffnung 121 hindurch, wobei die Steuereinheit 5 außerhalb des Gehäuses 120, vorliegend oberhalb des Gehäuses 120, angeordnet ist.

Die Hubstange 3 umfasst eine Dichtung 36, mittels welcher die Hubstange 3 gegenüber der Gehäusedichtung 21 abgedichtet ist. Vorliegend ist die Dichtung 36 fest an der Hubstange 3 befestigt und ebenfalls fest an der Gehäuseöffnung 121 bzw. dem Gehäuse 120 befestigt. Die Dichtung 36 ist derart ausgebildet, dass ein während des Betriebs erforderlicher Hub der Hubstange 3 durch die Dichtung 36 ausgeglichen werden kann. Vorliegend weist die Dichtung 36 ein Silikonmaterial auf und ist in Form eines Faltenbalges ausgebildet.

Alternativ kann die Dichtung 36 auch in Form eines Hohlzylinders ausgebildet sein.

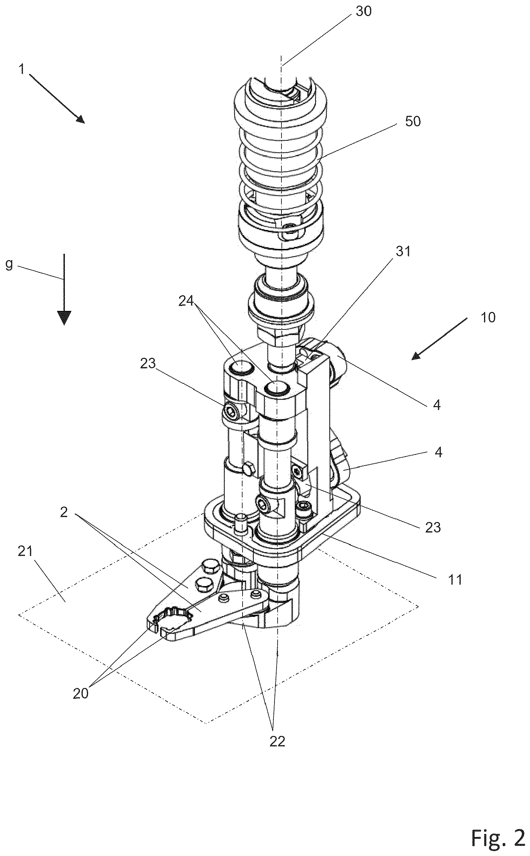

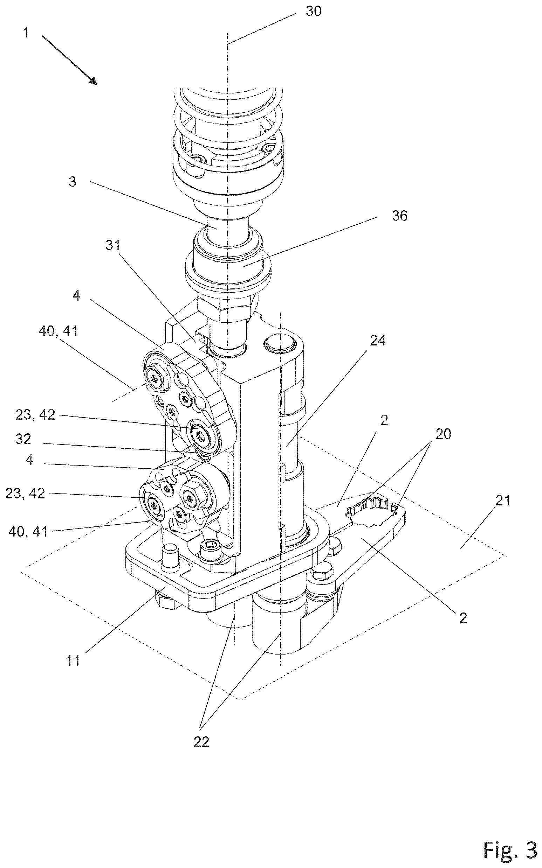

Figuren 2 und 3 zeigen schematisch eine perspektivische Seitenansicht und eine perspektivische Rückansicht einer Vorrichtung 1 zum Halten eines Behälters, wie sie beispielsweise in der Behälterbehandlungsvorrichtung 100 gemäß Figur 1 enthalten sein kann.

Die Vorrichtung 1 umfasst, wie bereits hinsichtlich Figur 1 beschrieben, zwei in der Schwenkebene 21 relativ zueinander schwenkbare Greifarme 2 und die Hubstange 3.

Die Greifarme 2 sind jeweils um eine parallel zur Längsachse 30 orientierten Schwenkachse 22, ausgebildet über eine mechanische Welle 24, schwenkbar an einer Halterung 11 angeordnet. Jeder Greifarm 2 umfasst ferner einen an der Welle 24 angeordneten Schwenkhebel 23, welcher sich senkrecht zur Schwenkachse 22 bezogen auf die Schenkachse 22 auf der dem Halteabschnitt 20 gegenüberliegenden Seite erstreckt. Der Schwenkhebel 23 ist hierbei drehfest mit dem Greifarm 2 verbunden.

Die Hubstange 3 umfasst ein S-förmiges Schlittenelement 31, dass in einem Mittelabschnitt 32 des Schlittenelementes 31 starr an der Hubstange 3 befestigt ist.

Jeder Schwenkhebel 23 ist jeweils über ein Koppelglied 4 mit der Hubstange 3 gekoppelt, wobei sich die Kopplung 42 zwischen Koppelglied 4 und Schwenkhebel 23 bezogen auf die zugehörige Schwenkachse 22 auf der dem Halteabschnitt 20 gegenüberliegenden Seite befindet. Jedes Koppelglied 4 ist jeweils drehbar an einer Seite des Schlittenelementes 31 der Hubstange 3 angeordnet, wobei eine Drehachse 40 (siehe Figur 3) des Koppelgliedes 4 senkrecht zur Längsachse 30 orientiert ist. Auf der anderen Seite des Koppelgliedes 4 ist der Schwenkhebel 23 am Koppelglied 4 spielbehaftet geführt, um ein Verklemmen zu verhindern.

Ferner umfasst jedes Koppelglied 4 ein Einstellelement, vorliegend ausgebildet als Exzenterelement 43, zum Einstellen der Schwenkposition des Greifarmes. Über das Exzenterelement 43 kann ein Abstand zwischen der Kopplung 41 und der Kopplung 42 eingestellt werden.

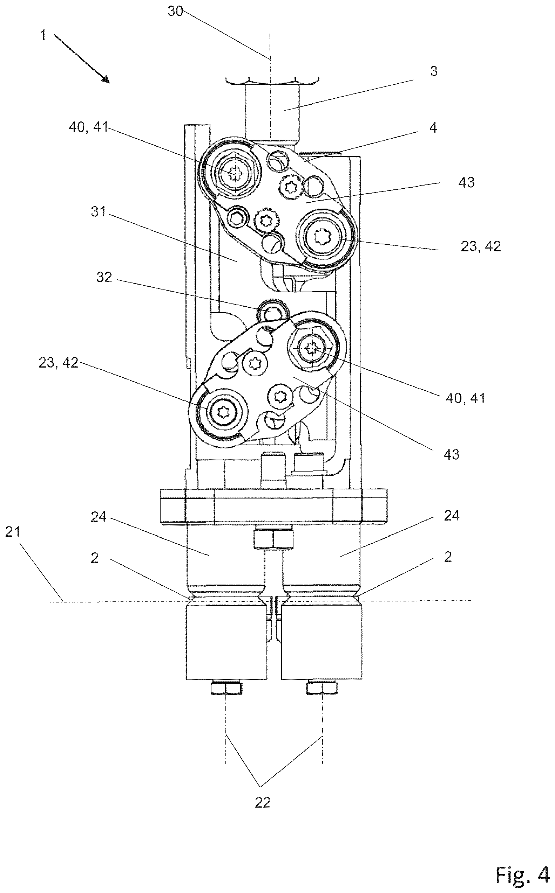

Wie aus Figur 4, welche schematisch eine Rückansicht der Vorrichtung 1 aus den Figuren 2 und 3 zeigt, zu erkennen, ist die Kopplung 41 zwischen Koppelglied 4 und Schlittenelement 31 oberhalb der Kopplung 42 zwischen Koppelglied 4 und Schwenkhebel 23 angeordnet, wobei die Kopplungen 41, 42 bezogen auf die Schwenkachsen 22 auf einer den Halteabschnitten 20 gegenüberliegenden Seite angeordnet sind. Dadurch kommt es bei einem Verschieben der Hubstange 3 in Gravitationsrichtung g zu einem Schließen der Greifarme 2.

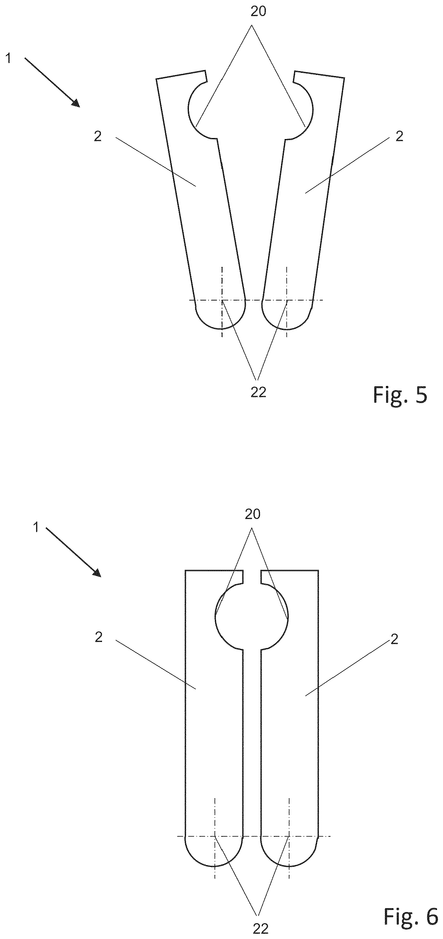

Aus Figur 5 ist schematisch ein Paar von Greifarmen 2 der Vorrichtung 1 in einem geöffneten Zustand gezeigt, und in Figur 6 schematisch das Paar von Greifarmen aus Figur 5 in einem Schließzustand.

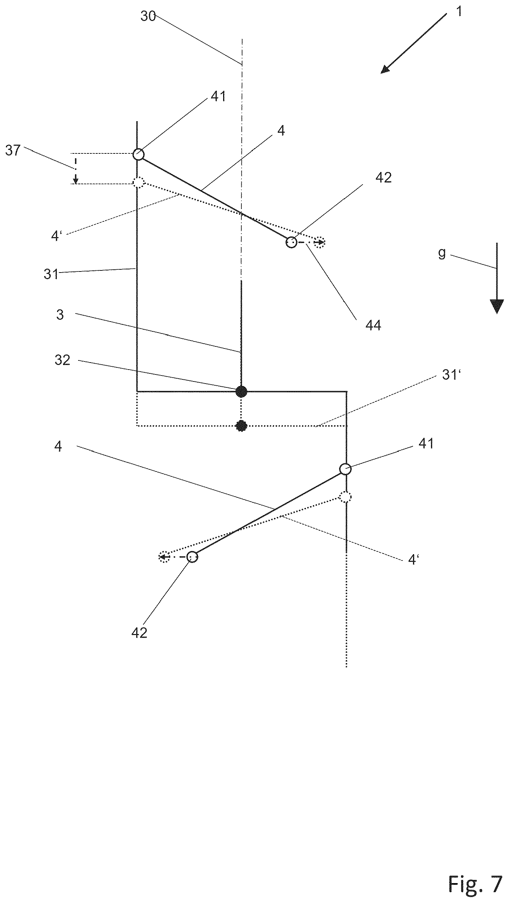

Figur 7 zeigt schematisch eine Funktionsskizze der Vorrichtung 1 aus den Figuren 2 bis 4, wobei mit durchgezogenen Linien die Hubstange 3 samt S-förmigen Schlittenelement 31 und die Koppelglieder 4 mit ihren Koppelungen 41, 42 in einer in Gravitationsrichtung g gesehenen oberen Position gezeigt sind. Mittels der gestrichelten Linien ist deren Position angedeutet, welche sie aufweisen, wenn die Hubstange 3 um eine vorgegebene Verschiebung 37 verschoben wurde. Durch die Verschiebung 37 wird ein entsprechender Versatz 44 der Kopplung 42 senkrecht zur Längsachse 30 nach außen. Der mit dem Koppelglied 4 an der Kopplung 42 gekoppelte Schwenkhebel 23 erfährt entsprechend des Versatzes 44 eine Schwenkbewegung, welche dieser auf den jeweiligen Greifarm 2 überträgt.

Aufgrund der Anordnung der Koppelung 41 oberhalb der Koppelung 42 werden die Greifarme 2 geschlossen, in dem die Hubstange 3 nach unten bewegt wird.

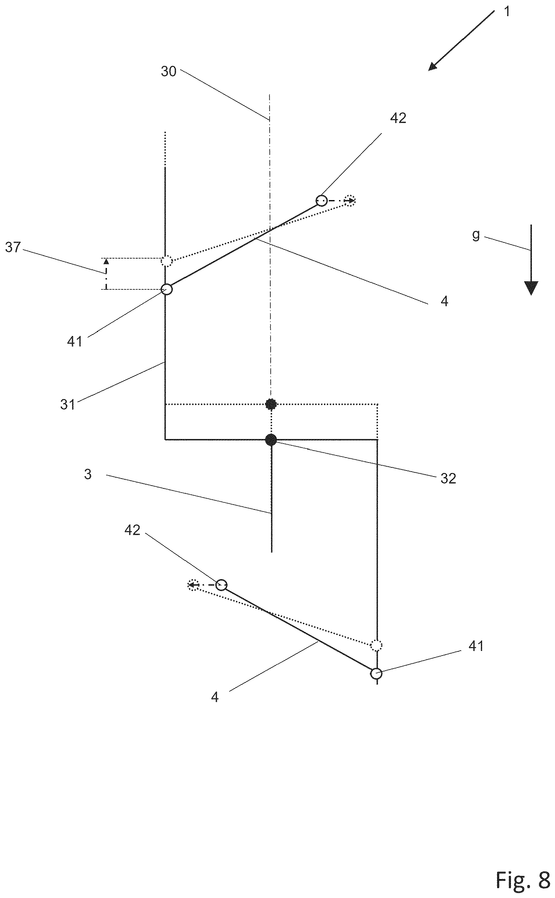

Figur 8 zeigt schematisch eine Funktionsskizze einer weiteren Vorrichtung 1 zum Halten eines Behälters. Die Vorrichtung 1 entspricht im Wesentlichen jener aus Figur 7, wobei hier die Koppelungen 41 unterhalb der Koppelungen 42 angeordnet sind. Entsprechend erfolgt ein Schließen der Greifarme 2 durch ein Anheben der Hubstange 3, mithin einem Verschieben 37 entgegen der Gravitationsrichtung g, da die Kopplungen 41, 42 bezogen auf die Schwenkachsen 22 auf einer den Halteabschnitten 20 gegenüberliegenden Seite angeordnet sind.

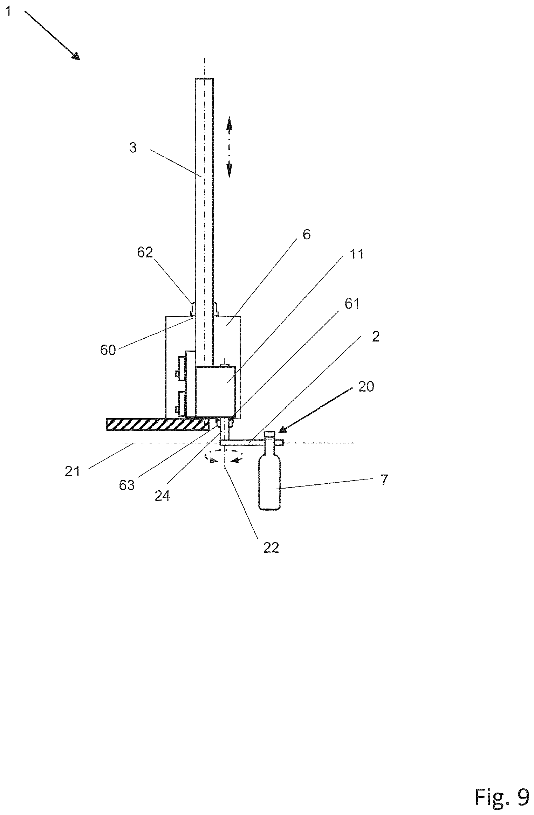

Aus Figur 9 ist schematisch eine Seitenansicht einer weiteren Vorrichtung 1 zum Halten eines Behälters 7 zu entnehmen. Die Vorrichtung 1 entspricht im Wesentlichen jener der Figuren 2 bis 4, wobei ein Kopplungsgehäuse 6 das Schlittenelement 31, die Koppelglieder 4 und die Schwenkhebel 23 einhaust.

Die Hubstange 3 erstreckt sich durch eine mittels einer Dichtung 62 abgedichtete Öffnung 60 im Kopplungsgehäuse 6, und die Wellen 24 der Greifarme 2 erstrecken sich jeweils durch eine mittels einer Dichtung 63 abgedichtete Bohrung 61 im Kopplungsgehäuse 6.

Die Dichtung 62 ist hierbei ausgebildet, den während des Betriebs auftretenden, erforderlichen Hub der Hubstange 3 auszugleichen. Ferner ist die Dichtung 63 ausgebildet, die während des Betriebs auftretende, erforderliche Schwenkbewegung der Welle 24 auszugleichen.

### Bezugszeichenliste

- 1: Vorrichtung
- 10: Kopplungsanordnung
- 11: Halterung

- 2: Greifarm
- 20: Halteabschnitt
- 21: Schwenkebene
- 22: Schwenkachse
- 23: Schwenkhebel
- 24: Welle
- 25: Schwenken

- 3: Hubstange
- 30: Längsachse
- 31: Schlittenelement
- 32: Mittelabschnitt
- 33: Stangenelement
- 34: Stangenelement
- 35: Feder
- 36: Dichtung
- 37: Verschiebung
- 38: Absatz

- 4: Koppelglied
- 40: Drehachse
- 41: Kopplung mit Hubstange
- 42: Kopplung mit Schwenkhebel
- 43: Exzenterelement
- 44: Versatz

- 5: Steuereinheit
- 50: Vorspannelement
- 51: Interaktionsabschnitt
- 52: Rolle
- 53: Wälzlager

- 6: Kopplungsgehäuse
- 60: Öffnung
- 61: Bohrung
- 62: Dichtung
- 63: Dichtung

- 7: Behälter

- 100: Behälterbehandlungsvorrichtung
- 110: Transportvorrichtung
- 111: Träger
- 120: Gehäuse
- 121: Gehäuseöffnung
- 130: Behandlungsvorrichtung

- g: Gravitationsrichtung

## Patentansprüche

1. Vorrichtung (1) zum Halten eines Behälters (7) in einer Behälterbehandlungsvorrichtung (120), bevorzugt zum Halten eines Getränkebehälters (7) in einem Halsabschnitt oder in einem Bauchabschnitt, umfassend zwei in einer Schwenkebene (21) relativ zueinander schwenkbare Greifarme (2), welche jeweils einen Halteabschnitt (20) zum Halten des zu haltenden Behälters (7) aufweisen, und
eine Hubstange (3), welche derart mit den Greifarmen (3) gekoppelt ist, dass durch ein Verschieben der Hubstange (3) senkrecht zur Schwenkebene (21) der Greifarme (2) die Halteabschnitte (20) relativ zueinander verschwenkbar sind,
**dadurch gekennzeichnet, dass**
die Hubstange (3) zwei in Richtung der Längsachse (30) relativ zueinander verschiebbare Stangenelemente (33, 34) umfasst, wobei die Stangenelemente (33, 34) in Richtung der Längsachse (30) über ein Federelement (35) gekoppelt sind.

2. Vorrichtung (1) gemäß Anspruch 1, **dadurch gekennzeichnet, dass** die Greifarme (2) um eine gemeinsame Schwenkachse schwenkbar angeordnet sind oder die Greifarme (2) jeweils eine eigene Schwenkachse (22) aufweisen, um welche sie schwenkbar angeordnet sind, wobei zumindest ein Greifarm (2) einen fest mit dem Greifarm (2) verbundenen Schwenkhebel (23) umfasst, welcher über ein Koppelglied (4) mit der Hubstange (3) gekoppelt ist, wobei bevorzugt beide Greifarme (2) jeweils einen Schwenkhebel (23) aufweisen, welcher jeweils über ein Koppelglied (4) mit der Hubstange (3) gekoppelt ist oder die Greifarme (2) zueinander drehgekoppelt sind, bevorzugt über zwei ineinandergreifende Zahnräder.

3. Vorrichtung (1) gemäß dem vorstehenden Anspruch, **dadurch gekennzeichnet, dass** das Koppelglied (4) drehbar an der Hubstange (3) angeordnet ist, wobei bevorzugt eine Drehachse (40) des Koppelgliedes (4) senkrecht zur Längsachse (30) der Hubstange (3) orientiert ist, und/oder, **dass** der Schwenkhebel (23) in seiner Längsrichtung verschiebbar am Koppelglied (4) aufgenommen ist und/oder der Schwenkhebel (23) relativ zum Koppelglied (4) drehbar und/oder spielbehaftet am Koppelglied (4) aufgenommen ist, und/oder, **dass** das Koppelglied (4) ein Einstellelement, bevorzugt ein Exzenterelement (43), zum Einstellen der Schwenkposition des Greifarmes aufweist.

4. Vorrichtung (1) gemäß einem der Ansprüche 2 oder 3, **dadurch gekennzeichnet, dass** die Hubstange (3) ein Schlittenelement (31) umfasst, wobei das zumindest eine Koppelglied (4) mit dem Schlittenelement (31) gekoppelt ist, wobei bevorzugt bezogen auf die Längsachse (30) das Koppelglied (4) auf einer Seite mit dem Schlittenelement (31) gekoppelt ist, und das Koppelglied (4) auf der anderen Seite mit dem Schwenkhebel (23) gekoppelt ist, wobei das Schlittenelement (31) bevorzugt S-förmig ausgebildet ist und an einem Mittelabschnitt (32) mit der Hubstange (3) verbunden ist.

5. Vorrichtung (1) gemäß einem der Ansprüche 2 bis 4, **dadurch gekennzeichnet, dass** bezogen auf eine Orientierung eines durch die Greifarme (2) gehaltenen Behälters (7) die Kopplung (41) des Koppelgliedes (4) an der Hubstange (3) in Richtung der Längsachse (30) oberhalb der Kopplung (42) des Koppelgliedes (4) mit dem Schwenkhebel (23) angeordnet ist, oder die Kopplung (41) des Koppelgliedes (4) an der Hubstange (3) in Richtung der Längsachse (30) unterhalb der Kopplung (42) des Koppelgliedes (4) mit dem Schwenkhebel (23) angeordnet ist, und/oder **dass** die Kopplung (42) zwischen dem zumindest einen Schwenkhebel (23) und dem zumindest einen Koppelglied (4) bezogen auf die Schwenkachse (22) auf einer dem Halteabschnitt (20) gegenüberliegenden Seite angeordnet ist, oder die Kopplung (42) zwischen dem zumindest einen Schwenkhebel (23) und dem zumindest einen Koppelglied (4) bezogen auf die Schwenkachse (22) auf der Seite des Halteabschnitts (20) angeordnet ist.

6. Vorrichtung (1) gemäß einem der vorstehenden Ansprüche, **dadurch gekennzeichnet, dass** die Hubstange (3) an ihrer den Greifarmen (3) gegenüberliegenden Seite eine Steuereinheit (5) zum Steuern der Position der Hubstange (3) in Bezug auf die Längsachse (30) aufweist, wobei die Steuereinheit (5) bevorzugt ein Vorspannelement (50), bevorzugt eine Feder, zum Vorspannen der Hubstange (3) in eine vorgegebene Position und/oder einen Interaktionsabschnitt (51) zum Interagieren mit einer Vorgabevorrichtung zum Vorgeben der Position der Hubstange (3) umfasst, wobei das Interaktionselement bevorzugt in Form eines Gleitelements, eines Bolzens und/oder einer Rolle (52), bevorzugt ausgebildet zum Gleiten und/oder Abrollen auf einer als Leitkurve oder Führungsnut ausgebildeten Vorgabevorrichtung, ausgebildet ist.

7. Vorrichtung (1) gemäß einem der vorstehenden Ansprüche, **dadurch gekennzeichnet, dass** die Hubstange (3) eine Dichtung (36) zum Abdichten der Hubstange (3) gegenüber einer Gehäuseöffnung (121) eines Gehäuses (120) der Behälterbehandlungsvorrichtung (100), durch welche sich die Hubstange (3) erstreckt, umfasst, wobei bevorzugt die Dichtung (36) an der Hubstange (3) befestigt ist und/oder die Dichtung (36) ausgebildet ist, an der Gehäuseöffnung (121) befestigt zu werden, wobei die Dichtung (36) bevorzugt ausgebildet ist, einen zum Schwenken der Greifarme (2) während des Betriebs erforderlichen Hub der Hubstange (3) auszugleichen, wobei die Dichtung (36) bevorzugt ein Silikonmaterial umfasst und/oder als Faltenbalg ausgebildet ist.

8. Vorrichtung (1) gemäß einer der Ansprüche 2 bis 7, **dadurch gekennzeichnet, dass** ein Kopplungsgehäuse (6) das zumindest eine Koppelglied (4) und den zumindest einen Schwenkhebel (23) einhaust, wobei bevorzugt die Hubstange (3) sich durch eine bevorzugt abgedichtete Öffnung (60) im Kopplungsgehäuse (6) erstreckt, und die Greifarme (2) jeweils an einer um die Schwenkachse (22) des Greifarms (2) schwenkbare Welle (24) befestigt sind, wobei sich die Wellen (24) durch eine bevorzugt abgedichtete Bohrung (61) im Kopplungsgehäuse (6) erstrecken.

9. Behälterbehandlungsvorrichtung (100), umfassend eine Transportvorrichtung (110) zum Transportieren von Behältern (7),
**dadurch gekennzeichnet, dass**
die Transportvorrichtung (110) eine Vorrichtung (1) zum Halten eines Behälters (7) gemäß einem der vorstehenden Ansprüche aufweist.

10. Behälterbehandlungsvorrichtung (100) gemäß dem vorstehenden Anspruch, ferner umfassend ein Gehäuse (120) zum Bereitstellen eines abgeschlossenen Raumes, wobei die Greifarme (2) im Inneren des Gehäuses (120) angeordnet sind und die Hubstange (3) sich durch eine Gehäuseöffnung (121) erstreckt, wobei die Steuereinheit (5) außerhalb des Gehäuses (120) , bevorzugt oberhalb der Gehäuseöffnung (121), angeordnet ist.

## Claims

1. A device (1) for holding a container (7) in a container treatment device (120), preferably for holding a beverage container (7) in a neck portion or in a body portion, comprising two gripping arms (2), which are pivotable relative to one another in a pivoting plane (21) and which each have a holding portion (20) for holding the container (7) to be held, and
a lifting rod (3), which is coupled to the gripping arms (3) in such a way that the holding portions (20) can be pivoted relative to one another by moving the lifting rod (3) perpendicularly to the pivoting plane (21) of the gripping arms (2),
**characterized in that**
the lifting rod (3) comprises two rod elements (33, 34) which are displaceable relative to one another in the direction of the longitudinal axis (30), wherein the rod elements (33, 34) are coupled via a spring element (35) in the direction of the longitudinal axis (30).

2. The device (1) according to claim 1, **characterized in that** the gripping arms (2) are arranged so as to be pivotable about a common pivot axis, or each of the gripping arms (2) has its own pivot pin (22) about which the arms are pivotably arranged, wherein at least one gripping arm (2) comprises a pivoting lever (23), which is rigidly connected to the gripping arm (2) and is coupled to the lifting rod (3) via a coupling member (4), wherein preferably both gripping arms (2) each have a pivoting lever (23), each of which is coupled to the lifting rod (3) via a coupling member (4), or the gripping arms (2) are rotationally coupled to one another, preferably via two meshing gearwheels.

3. The device (1) according to the preceding claim, **characterized in that** the coupling member (4) is rotatably arranged on the lifting rod (3), wherein preferably an axis of rotation (40) of the coupling member (4) is oriented perpendicularly to the longitudinal axis (30) of the lifting rod (3), and/or **in that** the pivoting lever (23) is received on the coupling member (4) so as to be displaceable in its longitudinal direction, and/or the pivoting lever (23) is rotatable relative to the coupling member (4) and/or is received on the coupling member (4) with play, and/or **in that** the coupling member (4) has an adjusting element, preferably an eccentric element (43), for adjusting the pivoting position of the gripping arm.

4. The device (1) according to any of claims 2 or 3, **characterized in that** the lifting rod (3) comprises a slide element (31), wherein the at least one coupling member (4) is coupled to the slide element (31), wherein, preferably relative to the longitudinal axis (30), the coupling member (4) is coupled on one side to the slide element (31), and the coupling member (4) is coupled on the other side to the pivoting lever (23), wherein the slide element (31) is preferably S-shaped and is connected to the lifting rod (3) on a central portion (32).

5. The device (1) according to any of claims 2 to 4, **characterized in that,** relative to an orientation of a container (7) held by the gripping arms (2), the coupling (41) of the coupling member (4) to the lifting rod (3) is arranged in the direction of the longitudinal axis (30) above the coupling (42) of the coupling member (4) with the pivoting lever (23), or the coupling (41) of the coupling member (4) to the lifting rod (3) is arranged in the direction of the longitudinal axis (30) below the coupling (42) of the coupling member (4) with the pivoting lever (23), and/or **in that** the coupling (42) between the at least one pivoting lever (23) and the at least one coupling member (4), relative to the pivot axis (22), is arranged on a side opposite the holding portion (20), or the coupling (42) between the at least one pivoting lever (23) and the at least one coupling member (4), relative to the pivot axis (22), is arranged on the side of the holding portion (20).

6. The device (1) according to any of the preceding claims, **characterized in that** the lifting rod (3) comprises a control unit (5) on its side opposite the gripping arms (3) for controlling the position of the lifting rod (3) in relation to the longitudinal axis (30), wherein the control unit (5) preferably comprises a preloading element (50), preferably a spring, for preloading the lifting rod (3) into a predetermined position and/or an interaction portion (51) for interacting with a specification device for specifying the position of the lifting rod (3), wherein the interaction element is preferably in the form of a sliding element, a bolt and/or a roller (52), is preferably configured for sliding and/or rolling on a specification device in the form of a guide cam or guide groove.

7. The device (1) according to any of the preceding claims, **characterized in that** the lifting rod (3) comprises a seal (36) for sealing the lifting rod (3) with respect to a housing opening (121) of a housing (120) of the container treatment device (100), through which the lifting rod (3) extends, wherein the seal (36) is preferably fastened to the lifting rod (3) and/or the seal (36) is configured to be fastened to the housing opening (121), wherein the seal (36) is preferably configured to compensate for a stroke of the lifting rod (3) required for pivoting the gripping arms (2) during operation, wherein the seal (36) preferably comprises a silicone material and/or is in the form of bellows.

8. The device (1) according to any of claims 2 to 7, **characterized in that** a coupling housing (6) houses the at least one coupling member (4) and the at least one pivoting lever (23), wherein the lifting rod (3) preferably extends through a preferably sealed opening (60) in the coupling housing (6), and the gripping arms (2) are each fastened to a shaft (24), pivotable about the pivot axis (22), of the gripping arm (2), wherein the shafts (24) extend through a preferably sealed bore (61) in the coupling housing (6).

9. A container treatment device (100) comprising a transport device (110) for transporting containers (7),
**characterized in that**
the transport device (110) comprises a device (1) for holding a container (7) according to any of the preceding claims.

10. The container treatment device (100) according to the preceding claim, further comprising a housing (120) for providing a sealed chamber, wherein the gripping arms (2) are arranged inside the housing (120) and the lifting rod (3) extends through a housing opening (121), wherein the control unit (5) is arranged outside the housing (120), preferably above the housing opening (121).

## Revendications

1. Dispositif (1) permettant de maintenir un récipient (7) dans un dispositif de traitement de récipients (120), de préférence de maintenir un récipient de boisson (7) dans une partie du cou ou dans une partie de l'abdomen, comprenant deux bras de préhension (2) pouvant pivoter l'un par rapport à l'autre dans un plan de pivotement (21), qui présentent respectivement une section de maintien (20) permettant de maintenir le récipient (7) à maintenir et
une barre de levage (3), qui est accouplée avec les bras de préhension (3) de telle sorte que par un déplacement de la barre de levage (3) perpendiculairement au plan de pivotement (21) des bras de préhension (2) les sections de maintien (20) peuvent pivoter l'une par rapport à l'autre,
**caractérisé en ce que**
la barre de levage (3) comprend deux segments de barre (33, 34) pouvant être déplacés dans la direction de l'axe longitudinal (30) l'un par rapport à l'autre, dans lequel les éléments de barre (33, 34) sont accouplés dans la direction de l'axe longitudinal (30) par le biais d'un élément de ressort (35).

2. Dispositif (1) selon la revendication 1, **caractérisé en ce que** les bras de préhension (2) sont agencés de manière à pouvoir pivoter autour d'un axe de pivotement commun ou les bras de préhension (2) présentent respectivement un axe de pivotement (22) propre, autour duquel ils sont agencés de manière à pouvoir pivoter, dans lequel au moins un bras de préhension (2) comprend un levier de pivotement (23) relié de manière fixe au bras de préhension (2), qui est accouplé à la barre de levage (3) par le biais d'un organe d'accouplement (4), dans lequel de préférence les deux bras de préhension (2) présentent respectivement un levier de pivotement (23), qui est accouplé respectivement à la barre de levage (3) par le biais d'un organe d'accouplement (4) ou les bras de préhension (2) sont accouplés en rotation l'un par rapport à l'autre, de préférence par le biais de deux roues dentées venant en prise l'une dans l'autre.

3. Dispositif (1) selon la revendication précédente, **caractérisé en ce que** l'organe d'accouplement (4) est agencé de manière pouvoir tourner sur la barre de levage (3), dans lequel de préférence un axe de rotation (40) de l'organe d'accouplement (4) est orienté perpendiculairement à l'axe longitudinal (30) de la barre de levage (3) et/ou, **que** le levier de pivotement (23) est reçu de manière à pouvoir se déplacer dans sa direction longitudinale sur l'organe d'accouplement (4) et/ou le levier de pivotement (23) est reçu de manière à pouvoir tourner par rapport à l'organe d'accouplement (4) et/ou avec jeu sur l'organe d'accouplement (4) et/ou, **que** l'organe d'accouplement (4) présente un élément de réglage, de préférence un élément excentrique (43), pour le réglage de la position de pivotement du bras de préhension.

4. Dispositif (1) selon l'une des revendications 2 ou 3, **caractérisé en ce que** la barre de levage (3) comprend un élément de chariot (31), dans lequel l'au moins un organe d'accouplement (4) avec accouplé avec l'élément de chariot (31), dans lequel de préférence, par rapport à l'axe longitudinal (30), l'organe d'accouplement (4) est accouplé d'un côté avec l'élément de chariot (31) et l'organe d'accouplement (4) est accouplé de l'autre côté avec le levier de pivotement (23), dans lequel l'élément de chariot (31) est de préférence en forme de S et est relié avec la barre de levage (3) au niveau d'une section centrale (32).

5. Dispositif (1) selon l'une des revendications 2 à 4, **caractérisé en ce que** par rapport à une orientation d'un récipient (7) maintenu par les bras de préhension (2) l'accouplement (41) de l'organe d'accouplement (4) sur la barre de levage (3) est agencé dans la direction de l'axe longitudinal (30) au-dessus de l'accouplement (42) de l'organe d'accouplement (4) avec le levier de pivotement (23) ou l'accouplement (41) de l'organe d'accouplement (4) sur la barre de levage (3) en direction de l'axe longitudinal (30) est agencé au-dessous de l'accouplement (42) de l'organe d'accouplement (4) avec le levier de pivotement (23) et/ou **que** l'accouplement (42) entre l'au moins un levier de pivotement (23) et l'au moins un organe d'accouplement (4) par rapport à l'axe de pivotement (22) est agencé sur un côté opposé à la section de maintien (20) ou l'accouplement (42) entre l'au moins un levier de pivotement (23) et l'au moins un organe d'accouplement (4) par rapport à l'axe de pivotement (22) est agencé sur le côté de la section de maintien (20).

6. Dispositif (1) selon l'une des revendications précédentes, **caractérisé en ce que** la barre de levage (3) présente sur son côté opposé aux bras de préhension (3) une unité de commande (5) pour la commande de la position de la barre de levage (3) par rapport à l'axe longitudinal (30), dans lequel l'unité de commande (5) comprend de préférence un élément de précontrainte (50), de préférence un ressort, pour la précontrainte de la barre de levage (3) dans une position prédéterminée et/ou une section d'interaction (51) pour l'interaction avec un dispositif de guidage pour le guidage de la position de la barre de levage (3), dans lequel l'élément d'interaction est formé de préférence sous la forme d'un élément coulissant, d'un boulon et/ou d'un rouleau (52), de préférence formé pour coulisser et/ou rouler sur un dispositif de guidage conçu comme une courbe de guidage ou une rainure de guidage.

7. Dispositif (1) selon l'une des revendications précédentes, **caractérisé en ce que** la barre de levage (3) comprend un joint d'étanchéité (36) pour assurer l'étanchéité de la barre de levage (3) par rapport à une ouverture de boîtier (121) d'un boîtier (120) du dispositif de traitement de récipients (100), à travers laquelle la barre de levage (3) s'étend, dans lequel de préférence le joint d'étanchéité (36) est fixé sur la barre de levage (3) et/ou le joint d'étanchéité (36) est formé pour être fixé sur l'ouverture de boîtier (121), dans lequel le joint d'étanchéité (36) est de préférence formé pour compenser une course de la barre de levage (3) nécessaire pour le pivotement des bras de préhension (2) pendant le fonctionnement, dans lequel le joint d'étanchéité (36) comprend de préférence un matériau de silicone et/ou est formé comme un soufflet.

8. Dispositif (1) selon l'une des revendications 2 à 7, **caractérisé en ce qu'**un boîtier d'accouplement (6) renferme l'au moins un élément d'accouplement (4) et l'au moins un levier de pivotement (23), dans lequel de préférence la barre de levage (3) s'étend à travers une ouverture (60) de préférence étanche dans le boîtier d'accouplement (6) et les bras de préhension (2) sont respectivement fixés à un arbre (24) pouvant pivoter autour de l'axe de pivotement (22) du bras de préhension (2), dans lequel les arbres (24) s'étendent à travers un alésage (61) de préférence étanche dans le boîtier d'accouplement (6).

9. Dispositif de traitement de récipients (100), comprenant un dispositif de transport (110) pour le transport de récipients (7),
**caractérisé en ce que**
le dispositif de transport (110) présente un dispositif (1) permettant de maintenir un récipient (7) selon l'une des revendications précédentes.

10. Dispositif de traitement de récipients (100) selon la revendication précédente, comprenant en outre un boîtier (120) permettant de fournir un espace fermé, dans lequel les bras de préhension (2) sont agencés dans l'intérieur du boîtier (120) et la barre de levage (3) s'étend à travers une ouverture de boîtier (121), dans lequel l'unité de commande (5) est agencée en dehors du boîtier (120), de préférence au-dessus de l'ouverture de boîtier (121).
